# EUROPEAN PATENT SPECIFICATION

(11) **EP 0 670 102 B1**
(45) Date of publication and mention of the grant of the patent: **09.07.1997**
(21) Application number: 94901087.0
(22) Date of filing: 18.11.1993
(51) Int. Cl.: H05C 3/00

(54) **A METHOD OF ELECTRONIC CONTROL**
ELEKTRONISCHES STEUERUNGSVERFAHREN
SYSTEME DE COMMANDE ELECTRONIQUE

(30) Priority: 20.11.1992 NZ 24520692
(43) Date of publication of application: 06.09.1995
(73) Proprietor: GALLAGHER ELECTRONICS LIMITED, Hamilton 2001 (NZ)
(72) Inventor: WALLEY, John, Leonard, Hamilton 2001 (NZ)
(74) Representative: Cross, Rupert Edward Blount
(86) International application number: NZ9300116
(87) International publication number: WO9413120

(56) References cited:
- EP-A- 0 514 222
- US-A- 4 270 735

## Description

### TECHNICAL FIELD

This invention relates to a method of electronic control.

### BACKGROUND ART

In particular, the present invention will be discussed with respect to fence systems having electric fence energisers, although it may be possible that aspects of the present invention could be applied to other situations.

Electric fence energisers emit a high voltage pulse approximately every second. The 'intensity' of the pulse is such that it acts to deter stock from touching the electric fence.

Typically, an electric fence energiser supplies pulses to electric fences covering a very broad area of a farm. If the farmer is moving stock, has temporary electric fence lines or for some other reason wishes to turn off the electric fence energiser, then he/she usually has to walk a considerable distance to turn off the electric fence energiser or to turn the energiser back on.

A product was invented (which is the subject matter of US Patent No. 4270735) that applied a DC signal to the electric fence line by connecting a battery from the fence to ground. The signal was received by a device that turned the energiser off or on. Unfortunately, this device had many problems. For example, the operation of the device was such that there was a large drain on the batteries used in the device to send the signal.

Poor electrical connections commonly occur on an electric fence, e.g. line clamps. Because of these poor connections, often the emitted signal would not reach the energiser switching device.

A further problem was that once the power supply was disconnected from the electric fence energiser, there was a significant start up time from when the electric fence energiser was turned on and the energy storage capacitor becoming sufficiently charged for normal energiser operation.

Further, the above device required a separate control device to the electric fence energiser. This totally separate device connected and disconnected the power supply to the energiser. The cost in labour required in producing the separate device was also a detriment commercially.

There are also other problems associated with attempting to send signals along an electric fence line. One such problem is that it is common for an electric fence line to have induced on it signals from other electric fences, power lines and the like. Often there is attenuation of a signal down the line as well.

US-A-4270735 discloses a method of and an apparatus for electronically controlling an electric fence energiser which emits energiser pulses to energise an electric fence line in which a signal is sent along an electric fence line to the electric fence energiser to cause the operative state of the electric fence energiser to change.

EP-A-514222 discloses a communications device capable of sending a coded signal down an electric sense line, the pulses of the coded signal being separate from the normal pulses produced by an electric fence energiser. The communications device may form part of the electric fence energiser and send signals which operate machinery or send a trigger signal to an information station or responder to obtain information. The responders may use a similar communications device to that used in the electric fence energiser to send back the required information.

It is an object of the present invention to address the above problems, or at least to provide the public with a useful choice.

Further objects and advantages of the present invention will become apparent from the following description which is given by way of example only.

### DISCLOSURE OF INVENTION

According to one aspect of the present invention there is provided a method of electronically controlling an electric fence energiser which emits energiser pulses to energise an electric fence line comprising the step of sending a signal along an electric fence line to the electric fence energiser to cause the operative state of the electric fence energiser to change, characterised in that the signal is a coded signal and the method includes the step of applying partial validating checking to the coded signal.

Generally the change in operative state of the energiser will be on or off.

Use of a coded signal has a number of advantages. One advantage is that the signal is readily distinguished from natural noise which occurs on electric fence lines. Another advantage is that the production of a coded signal as opposed to a straight DC signal as previously, means that there is potentially less drain on the batteries of the device sending the signal.

The coded signal may come in a variety of forms, but in one embodiment the coded signal may comprise of a number of short pulses sent at predetermined times apart. Other types of coded signals may also be sent with variations in amplitude and so forth. However, the applicant has found that there can be attenuation in the amplitude of signals and therefore a coded signal which varies in the time domain is preferred to one that varies in the voltage domain.

A second aspect of the present invention provides a receiver for receiving a coded signal associated with an electric fence line, characterised by checking means for applying partial validity checking to received signals to determine if a coded signal specific to the receiver has been received.

A signalling device is provided in combination with the receiver of the second aspect of the present invention, said device having a signal power supply, signal producing means, and signal control means to control the signal producing means, the arrangement and construction being such that in operation the signal power supply can provide power to the signal producing means which is then controlled by the control means so that a coded signal produced by the signal producing means can be sent along the electric fence line.

The signal producing means may come in a variety of forms, however in preferred embodiments this is a capacitor. The power supply may again be any type of power supply, but in preferred embodiments shall be a battery. The control means may also come in variety of forms, but in preferred embodiments is a programmed microprocessor.

Reference throughout this specification shall now be made to the power supply as being a battery, the signal producing means being a capacitor and the control means as being a microprocessor. Other componentry may of course be used.

In previous devices, the batteries of the signalling device were connected between the electric fence line and ground, and therefore the supply of the DC signal throughout the electric fence line placed a heavy load on the battery - tending to drain same. With a send device in accordance with the present invention, the battery need only charge a capacitor (or some other pulse/signal producing device) which is then discharged into the electric fence line. Therefore, there is no direct link between the battery and the electric fence line, and the capacitor is only charged for a short period of time - thus less drain on the battery.

In preferred embodiments, a high voltage is used (say 100V to 20kV), and in preferred embodiments in the order of kilovolts - which is a similar magnitude to that of electric fence energiser pulses. If a high voltage is used, then a signal is more likely to cross air gaps created by poor electrical connections (for example improperly connected fence wires) on the electric fence line.

In preferred embodiments of the present invention the signal sent along the electric fence line may have a voltage lower than that typically produced by an electric fence energiser, but still sufficiently high to be read by a suitable receiving device and cross typical poor electrical connections found in electric fence systems.

For example with a load of 500 ohms, a low energy electric fence energiser may product a typical pulse every second in the order of 3 kilovolts having a duration of approximately 30 microseconds. A high energy energiser with a load of 500 ohms may produce pulses having a peak voltage in the order of 4.7 kilovolts and the duration in the order of 300 microseconds. In comparison, the signal pulse may have a peak voltage of between 800 to 3kV and a duration in the order of 6 microseconds.

Due to the high voltage of the signalling device pulses, these pulses could appear on adjacent or nearby fence lines (by capacitor or inductive pick-up, or a direct connection etc), and turn an energiser on or off. To overcome this problem, the receiving and sending devices could have a matching selectable pulse interval or an identity code. This selectable pulse interval could be stored via a series of switches, or EPROM, or in some similar manner. The selectable pulse interval may alter the signalling device pulse interval so the units are distinguishable, and will not turn off an adjacent fence line.

A significant feature of the present invention is the ability for the receiver to not just react when it received a signal of any type, but only react when it receives a signal having the appropriate code/characteristics. Therefore, if the signals sent along one fence system are induced onto another fence system, they would not necessarily match the signal expected to be received and therefore are not affected by same. This is described in greater detail below.

For example, a user may control the code in the send or signalling device with user selectable code circuitry. This may be DIP switches or header pins or some other method. This can be used to change the timing of the signal pulse train which allows the signalling device to only act on the desired energiser.

For example, consider four neighbouring farms having each electric fence energiser all set at code 1.

| | |
|---|---|
| Farm 1 | Farm 3 |
| Code 1 | Code 1 |
| Farm 2 | Farm 4 |
| Code 1 | Code 1 |

If farmer 1 turns his/her system off on the fence, the signals may be induced onto the other farms fences. This is caused by the nature of the signals and the nature of the electric fences. This is because the signals are high voltage pulses and the fences are large conducting networks. Therefore systems on the neighbouring farms may be switched on or off.

If user selectable codes are used then the four systems can be set so that they are all different as illustrated below. No signal will therefore interfere with the neighbouring system.

| | |
|---|---|
| Farm 1 | Farm 3 |
| Code 1 | Code 3 |
| Farm 2 | Farm 4 |
| Code 2 | Code 4 |

The number of pulses sent in a typical coded signal may vary but in a preferred embodiment five coded pulses will be sent:

A further advantage of having a coded signal means that a signal can be validity checked and distinguished by a control circuit within the electric fence energiser over other signals which may appear on the electric fence line.

As one of the functions of an electric fence energiser is to produce pulses, it is highly probable that a pulse could be produced by the energiser while the coded signal is being received. If only the exact coded signal was required to change the state of the electric fence energiser, then it is possible that the natural function of the electric fence energiser may interfere with same and multiple coded signals may have to be sent before they are received and acted on.

The present invention therefore includes the feature of partial validity checking. For example, if the coded signal has five pulses and four corresponding pulse intervals, then the control means within the energiser need only detect say four of these pulses and three of the pulse intervals. As an example, the coded signal may comprise of five pulses which are sent at equal times apart. The partial validity checking means need only determine whether four pulses have been received and that three valid pulse intervals were detected.

In other embodiments, the times between pulses may not be equal but just predetermined.

In a further embodiment of the present invention, the control means may not act to connect or disconnect the power supply from the electric fence energiser as with previous devices, but may control directly the main pulse switching devices (generally an SCR) that discharges the main energy storage capacitor within the electric fence energiser. There is now no need to wait before an electric fence energiser can be operated as the main storage capacitor remains charged. It is only the pulse switching device that discharges the capacitor which is disabled.

A further advantage of having an embodiment as described above is that the receiving unit may be placed within the energiser rather than being a separate device.

In a preferred embodiment a capacitor divider network is used (at the energiser) to detect pulses on the fence while still providing mains isolation. The capacitor divider is also a high pass filter which removes any 50 Hz mains components (and any other low frequencies). This high pass filter enables the pulse detection level to be set as low as 200 mV (which increases the sensitivity of the receiving means to detect the sending device), while avoiding false pulse detection due to mains on the fence line.

### BRIEF DESCRIPTION OF DRAWINGS

Aspects of the present invention will now be discussed by way of example only and with reference to the accompanying drawings in which:
- Figure 1a:: is a diagram of a possible coded signal for use with the present invention, and
- Figure 1b:: is a diagram of a possible coded signal for use with the present invention with an energiser output signal shown and
- Figure 2a, 2b:: illustrate the proportional sizes between typical electric fence pulses and signal pulses in accordance with one embodiment of the present invention, and
- Figure 3:: is a block diagram of possible circuitry to be used with a signalling device in accordance with the present invention.

### BEST MODES FOR CARRYING OUT THE INVENTION

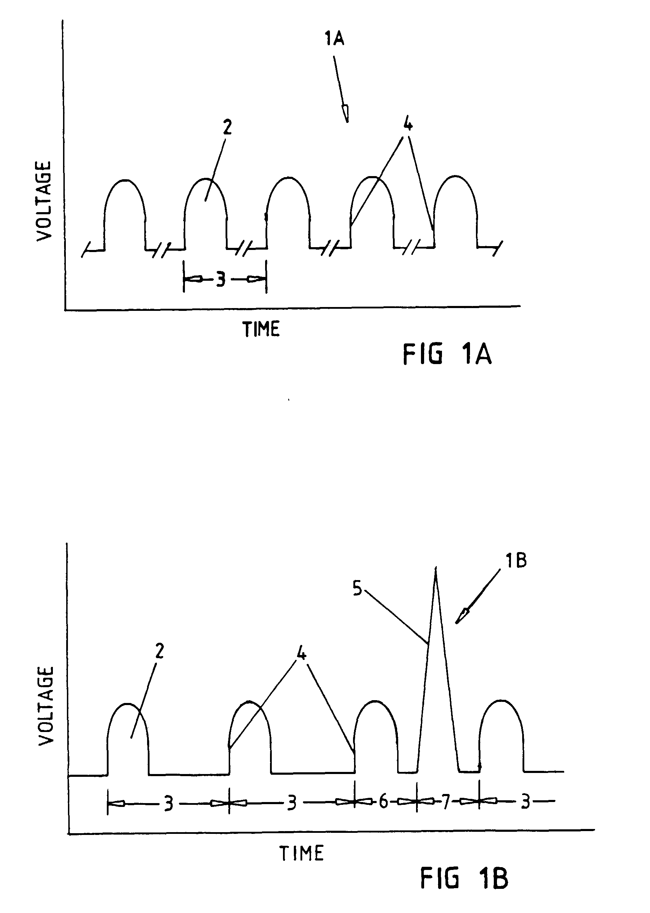

Figure 1a is a voltage verses time graph in which a possible coded signal 1a in accordance with one possible embodiment of the present invention is shown.

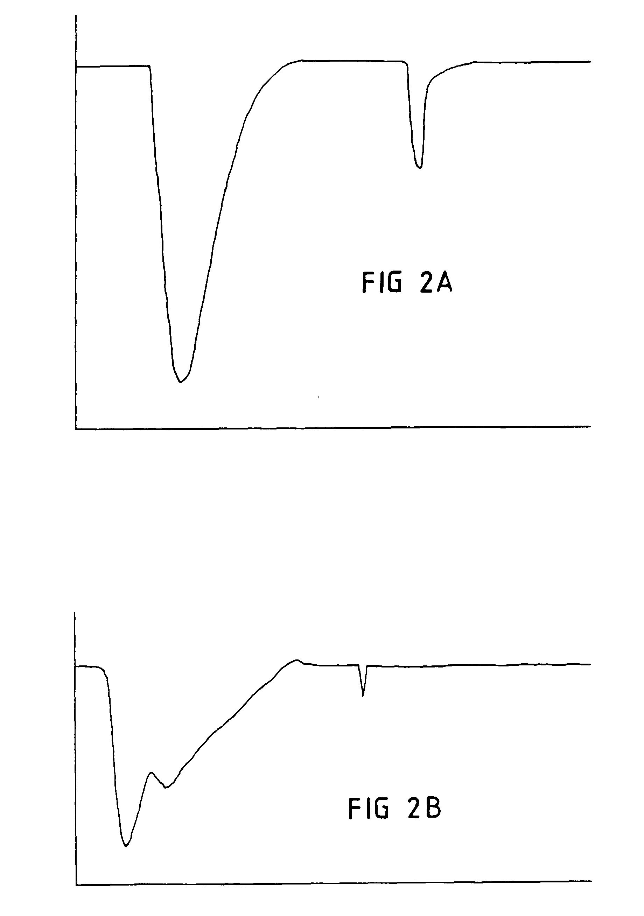

It should be appreciated that Figures 1a and 1b are not intended to show the relative sizes of the electric fence pulses and the coded pulses with respect to each other but merely illustrate the overall operation of the present invention. Figures 2a and 2b however are representative and show more clearly the relative sizes of the electric fence energiser pulse and the signal pulses.

Referring back to Figure 1a, there are five pulses 2, all of which are of equal height and width and are spaced at predetermined intervals.

In this particular embodiment of the present invention, the height and width of the pulses 2 which make up the coded signal are immaterial. All that really matters is the length of time 3 between the leading edges 4 of the pulses 2. The fact that the pulses 2 are identical in height and width can be attributed to the electronic control means in the signal device.

Figure 1b illustrates the signal shown in Figure 1a, but with an electric fence pulse 5 appearing in the middle of the signal 16. The pulses 2 are still the same periods of time 3 apart as previously. However, the receiving means in the electric fence energiser will read the pulse 5.

In addition to the expected time differences 3 between leading edges, there are also time distances 6 and 7 between the leading edges caused by the unexpected arrival of the electric fence pulse 5.

If partial validity checking is used, then the receiving means only requires three valid time periods 3. Thus the existence of the electric fence pulse 5 enables the energiser to be controlled despite the receiving means receiving a corrupted signal. The interval between coded pulses is significantly longer than an energiser pulse width so that only one of the code pulse intervals could be interfered with.

It is thought that the controlling circuitry can be incorporated into the usual energiser control. In other embodiments the control may come from a microprocessor or microcontroller device. This control means can disable the SCR so that it cannot fire in response from other signals from within the control means of the electric fence energiser.

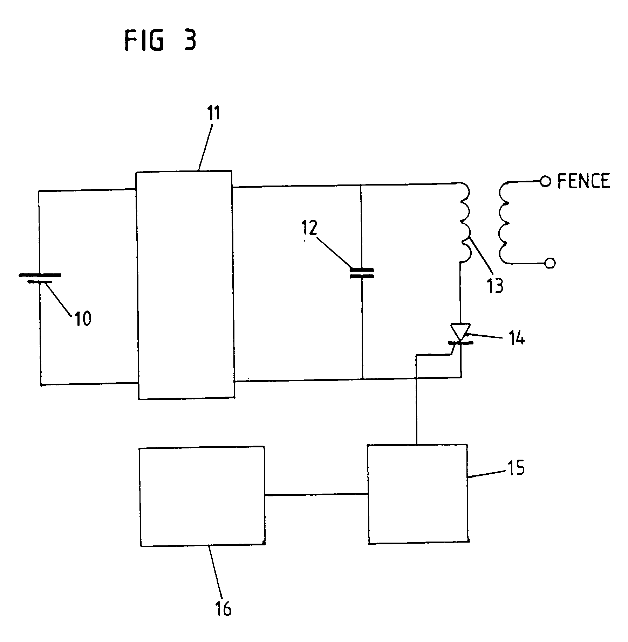

Referring now to Figure 3, there is illustrated a block diagram which shows one possible construction of a signalling device in accordance with one embodiment of the present invention.

The power supply in this embodiment is either a 9 or 12 volt battery 10.

The battery 10 is connected to a DC to DC converter 11 which converts the battery voltage so that the capacitor 12 can be charged to a few hundred volts.

The capacitor 12 can be discharged through the transformer 13 via a controllable switch in the form of a SCR 14. The discharge of the capacitor 12 produces the signal pulse.

The timing of the signal pulses or discharge of the capacitor 12 is controlled by the control circuitry 15 which is governed by the user selectable code circuitry 16. The control circuitry 15 may come in a variety of forms and in some embodiments may be a microprocessor or micro controller. The user selectable code circuitry may also come in a variety of forms and may in some embodiments DIP switches or header pins.

Aspects of the present invention have been described by way of example only and it should be appreciated that modifications and additions may be made thereto without departing from the scope thereof as defined in the appended claims.

## Claims

1. A method of electronically controlling an electric fence energiser which emits energiser pulses to energise an electric fence line comprising the step of sending a signal along an electric fence line to the electric fence energiser to cause the operative state of the electric fence energiser to change, characterised in that the signal is a coded signal and the method includes the step of applying partial validating checking to the coded signal.

2. A method according to claim 1, wherein the coded signal comprises a plurality of coded pulses, the leading edges of the coded pulses being separated by predetermined time intervals, the pulse width of the energiser pulses being shorter than the shortest of said predetermined time intervals.

3. A method according to claim 2 wherein said predetermined time intervals are equal.

4. A method according to any one of the preceding claims, wherein the coded signal has a voltage which varies with time.

5. A receiver for receiving a coded signal associated with an electric fence line, characterised by checking means for applying partial validity checking to received signals to determine if a coded signal specific to the receiver has been received.

6. A receiver according to claim 5 further comprising a filter for filtering out electronic noise.

7. A receiver according to claims 5 or 6 in combination with an electric fence energiser for emitting energiser pulses to energise the electric fence line, the receiver including control means for causing the operative state of the electric fence energiser to change.

8. A receiver according to claim 7, wherein the control means comprises means for controlling the discharge mechanism of the electric fence energiser irrespective of the connection of a power supply to the electric fence energiser.

9. A receiver according to claims 7 or 8, wherein the receiver is incorporated within the energiser.

10. A signalling device in combination with the receiver of any one of claims 5 to 9, the signalling device comprising a signal power supply, signal producing means and signal control means to control the signal producing means, the arrangement and construction being such that in operation the signal power supply can provide power to the signal producing means which is then controlled by the control means so that a coded signal produced by the signal producing means can be sent along the electric fence line.

11. A signalling device according to claim 10 in combination with the receiver of any one of claims 7 to 9, wherein the coded signal has peak voltages of a similar magnitude to those of the energiser pulses.

12. A signalling device according to claim 11 wherein the coded signal comprises a plurality of coded pulses, the leading edges of the coded pulses being separated by predetermined time intervals, the pulse width of the energiser pulses being shorter than the shortest of said predetermined time intervals.

## Patentansprüche

1. Verfahren zum elektronischen Steuern einer Elektrozaunspeiseeinrichtung, die Speisepulse emittiert, um eine Elektrozaunleitung zu speisen, umfassend den Schritt des Sendens eines Signals entlang einer Elektrozaunleitung zu der Elektrozaunspeiseeinrichtung, um eine Änderung des Betriebszustands der Elektrozaunspeiseeinrichtung hervorzurufen,
**dadurch gekennzeichnet,** daß das Signal ein codiertes Signal ist und das Verfahren den Schritt des Anwendens einer partiellen Zulässigkeitsüberprüfung auf das codierte Signal umfaßt.

2. Verfahren nach Anspruch 1, bei dem das codierte Signal eine Mehrzahl von codierten Pulsen umfaßt, wobei die voreilenden Flanken der codierten Pulse durch vorbestimmte Zeitintervalle getrennt sind und wobei die Pulsbreite der Speisepulse kürzer als das kürzeste der vorbestimmten Zeitintervalle ist.

3. Verfahren nach Anspruch 2, bei dem die vorbestimmten Zeitintervalle gleich sind.

4. Verfahren nach einem der vorangehenden Ansprüche, bei dem das codierte Signal eine sich mit der Zeit verändernde Spannung aufweist.

5. Empfänger zum Empfangen eines einer Elektrozaunleitung zugeordneten codierten Signals,
**gekennzeichnet durch** ein Überprüfungsmittel zum Anwenden einer partiellen Zulässigkeitsüberprüfung auf empfangene Signale, um zu bestimmen, ob ein für den Empfänger spezifisches codiertes Signal empfangen wurde.

6. Empfänger nach Anspruch 5, ferner umfassend einen Filter zum Herausfiltern elektronischen Rauschens.

7. Empfänger nach Anspruch 5 oder 6 in Kombination mit einer Elektrozaunspeiseeinrichtung zum Emittieren von Speisepulsen zum Speisen der Elektrozaunleitung, wobei der Empfänger ein Steuermittel zum Hervorrufen einer Änderung des Betriebszustands der Elektrozaunspeiseeinrichtung umfaßt.

8. Empfänger nach Anspruch 7, bei dem das Steuermittel ein Mittel zum Steuern des Entlademechanismus der Elektrozaunspeiseeinrichtung ungeachtet der Verbindung einer Energieversorgung mit der Elektrozaunspeiseeinrichtung umfaßt.

9. Empfänger nach Anspruch 7 oder 8, wobei der Empfänger in die Speiseeinrichtung integriert ist.

10. Signalvorrichtung in Verbindung mit dem Empfänger nach einem der Ansprüche 5 bis 9, wobei die Signalvorrichtung eine Signalenergieversorgung, ein Signalerzeugungsmittel und ein Signalsteuermittel zum Steuern des Signalerzeugungsmittels umfaßt, wobei die Anordnung und die Konstruktion derart sind, daß im Betrieb die Signalenergieversorgung dem Signalerzeugungsmittel Energie zuführen kann, welches dann durch das Steuermittel derart gesteuert wird, daß ein durch das Signalerzeugungsmittel erzeugtes, codiertes Signal entlang der Elektrozaunleitung gesendet werden kann.

11. Signalvorrichtung nach Anspruch 10 in Verbindung mit dem Empfänger nach einem der Ansprüche 7 bis 9, wobei das codierte Signal Spitzenspannungen von ähnlicher Größe wie jene der Speisepulse aufweist.

12. Signalvorrichtung nach Anspruch 11, wobei das codierte Signal eine Mehrzahl von codierten Pulsen umfaßt, wobei die voreilenden Flanken der codierten Pulse durch vorbestimmte Zeitintervalle getrennt sind und wobei die Pulsbreite der Speisepulse kürzer als das kürzeste der vorbestimmten Zeitintervalle ist.

## Revendications

1. Procédé de commande électronique d'un appareil d'excitation d'une barrière électrique qui émet des impulsions d'excitation d'une ligne de barrière électrique, comprenant une étape d'émission d'un signal le long d'une ligne de barrière électrique vers l'organe d'excitation de barrière électrique de manière que l'état de fonctionnement de l'organe d'excitation de barrière électrique change, caractérisé en ce que le signal est un signal codé, et le procédé comprend une étape d'application d'une vérification de validité partielle au signal codé.

2. Procédé selon la revendication 1, dans lequel le signal codé comprend plusieurs impulsions codées, les flancs avant des impulsions codées étant séparés par des intervalles prédéterminés de temps, la largeur d'impulsion de l'organe d'excitation étant inférieure au plus court des intervalles prédéterminés de temps.

3. Procédé selon la revendication 2, dans lequel les intervalles prédéterminés de temps sont égaux.

4. Procédé selon l'une quelconque des revendications précédentes, dans lequel le signal codé a une tension qui varie au cours du temps.

5. Récepteur destiné à recevoir un signal codé associé à une ligne de barrière électrique, caractérisé par un dispositif de vérification destiné à appliquer une vérification de validité partielle aux signaux reçus pour la détermination du fait qu'un signal codé spécifique du récepteur a été reçu.

6. Récepteur selon la revendication 5, comprenant en outre un filtre destiné à retirer le bruit électronique par filtrage.

7. Récepteur selon la revendication 5 ou 6, en combinaison avec un organe d'excitation de barrière électrique destiné à émettre des impulsions d'excitation de la ligne de la barrière électrique, le récepteur comprenant un dispositif de commande destiné à provoquer un changement de l'état de fonctionnement de l'organe d'excitation de la barrière électrique.

8. Récepteur selon la revendication 7, dans lequel le dispositif de commande comporte un dispositif de commande du mécanisme de décharge de l'organe d'excitation de barrière électrique indépendamment de la connexion d'une alimentation à l'organe d'excitation de barrière électrique.

9. Récepteur selon la revendication 7 ou 8, dans lequel le récepteur est incorporé à l'organe d'excitation.

10. Appareil de signalisation combiné au récepteur selon l'une quelconque des revendications 5 à 9, l'appareil de signalisation comprenant une alimentation en signaux, un dispositif producteur de signaux et un dispositif de commande de signaux pour la commande du dispositif producteur de signaux, la disposition et la construction étant telles que, pendant le fonctionnement, l'alimentation de signaux peut transmettre de l'énergie au dispositif de production de signaux qui est alors commandé par le dispositif de commande si bien qu'un signal codé produit par le dispositif producteur de signaux peut être émis par la ligne de barrière électrique.

11. Appareil de signalisation selon la revendication 10 en combinaison avec le récepteur selon l'une des revendications 7 à 9, dans lequel le signal codé a des tensions de crête d'amplitude analogue à celle des impulsions de l'organe d'excitation.

12. Appareil de signalisation selon la revendication 11, dans lequel le signal codé comprend plusieurs impulsions codées, les flancs avant des impulsions codées étant séparés par des intervalles prédéterminés de temps, la largeur des impulsions de l'organe d'excitation étant inférieure au plus court des intervalles prédéterminés de temps.
